# EUROPEAN PATENT APPLICATION

(11) **EP 4 431 218 A1**
(43) Date of publication of application: **18.09.2024**
(21) Application number: 22892406.4
(22) Date of filing: 13.09.2022
(51) Int. Cl.: B23K 26/00, H01S 3/00, H01S 3/02

(54) **LASER PROCESSING DEVICE**

(30) Priority: 11.11.2021 JP 2021183980
(71) Applicant: Panasonic Intellectual Property Management Co., Ltd., Kadoma-shi, Osaka 571-0057 (JP)
(72) Inventor: NAGATOSHI, Keita, Kadoma-shi, Osaka 571- 8506 (JP)
(74) Representative: Murgitroyd & Company
(86) International application number: PCT/JP2022/034236
(87) International publication number: WO 2023/084905

(57) **Abstract**

A laser processing device (10) includes: a controller unit (11), a light source unit (12), and a head unit (13). The light source unit (12) includes a laser light source (44), a light-source drive circuit (43), and a light-source control unit (41). The light-source control unit (41) is configured so as to transmit a response signal in response to a request signal. The controller unit (11) includes a light-source power circuit (25) that supplies a light-source drive voltage (PL) to the light-source drive circuit (43). A main control unit (21) of the controller unit (11): transmits the request signal; determines, on the basis of the received response signal, whether the light source unit (12) can be driven; supplies the light-source drive voltage (PL) to the light-source drive circuit (43) from the light-source power circuit (25) in the case in which it is determined that the light source unit (12) can be driven; and does not supply the light-source drive voltage (PL) to the light-source drive circuit (43) from the light-source power circuit (25) in the case in which it is determined that the light source unit (12) cannot be driven.

## Description

### TECHNICAL FIELD

The present disclosure relates to a laser processing device.

### BACKGROUND ART

A laser processing device irradiates a processing subject with a laser beam to engrave characters, symbols, figures, and the like. A laser processing device is required to be applicable to a diversity of processing subjects and, for example, be applicable to the increasing number of user applications and diverse installation environments. Such a laser processing device is formed by combining units having different functionalities (for example, refer to Patent Literature 1 and 2).

Patent Literature 1 discloses an example of a laser processing device including a laser light source unit, which includes a laser oscillator, and a control unit, which supplies control voltage for the laser oscillator. In accordance with the intensity of the laser beam that is to be emitted to the workpiece, the laser oscillator is selected, for example, from laser light source units having different control voltage levels. The control unit is configured to supply control voltage corresponding to the laser oscillator of the connected laser light source.

### CITATION LIST

### Patent Literature

Patent Literature 1: Japanese Laid-Open Patent Publication No. 2020-157340
Patent Literature 2: Japanese Laid-Open Patent Publication No. 2006-095538

### SUMMARY OF INVENTION

### Technical Problem

Laser processing devices having different unit configurations may be implemented. In such a case, the units that are implemented include laser light source units that have different control voltage levels and control units that supply different control voltages. Thus, an operator checks the control voltage level of the oscillator to select the appropriate laser light source unit and control unit. Then, the operator connects the selected laser beam unit and control unit to assemble the laser processing device.

The laser light source units, however, have the same outer appearance. This may result in erroneous connection of a laser light source unit and a control unit that are for different control voltages.

The laser light source units have the same outer appearance, and the control units have the same outer appearance. If the operator has to select the laser light source unit each time, a human error will be difficult to avoid. This may result in erroneous connection of a laser light source unit and a control unit that are for different control voltages. Further, it will be difficult to determine from the assembled laser processing device whether the laser light source unit and the control unit are compatible.

It is an objective of the present disclosure to provide a laser processing device that allows for appropriate driving of a corresponding unit.

### Solution to Problem

A laser processing device in accordance with the present disclosure includes a light source unit including a laser light source that emits a laser beam, and a light source drive circuit that drives the laser light source. A first electrical cable is connected to the light source unit. An optical fiber cable is connected to the light source unit. A head unit, connected by the first electrical cable and the optical fiber cable to the light source unit, includes a head mechanism that includes a scanner for scanning the laser beam transmitted by the optical fiber cable, and a head drive circuit that drives the head mechanism. A second electrical cable is connected to the light source unit. A controller unit, connected to the light source unit by the second electrical cable, includes a head power circuit that supplies power to the head drive circuit of the head unit with the first electrical cable and the second electrical cable, a light source power circuit that supplies power to the light source drive circuit of the light source unit with the first electrical cable, and a main controller that controls the head power circuit and the light source power circuit. The first electrical cable and the second electrical cable are constructed identically. The light source unit is selected from among multiple types of units having different drive voltages for the light source drive circuit. The light source unit is configured to receive a request signal from the controller unit and transmit a response signal to the controller unit. The main controller outputs the request signal, determines whether the light source unit is drivable based on the response signal, supplies power from the light source power circuit to the light source drive circuit when determining that the light source unit is drivable, and does not supply power from the light source power circuit to the light source drive circuit when determining that the light source unit is not drivable.

A further laser processing device in accordance with the present disclosure includes a first light source unit including a first laser light source and a first light source drive circuit that drives the first laser light source. A first head unit, connected by a first electrical cable and the optical fiber cable to the first light source unit, includes a first head mechanism that irradiates a processing subject with a laser beam transmitted by the optical fiber cable, and a first head drive circuit that drives the head mechanism. A first controller unit, connected to the first light source unit by a second electrical cable, includes a first light source power circuit that supplies drive voltage to the first light source drive circuit, a first head power circuit that supplies drive voltage to the first head drive circuit, and a first main controller that controls the first light source power circuit and the first head power circuit. A second head unit includes a second laser light source, a second light source drive circuit that drives the second laser light source, a second head mechanism that irradiates a processing subject with a laser beam emitted from the second laser light source, and a second head drive circuit that drives the second head mechanism. A second controller unit, connected to the second head unit by a third electrical cable, includes a second light source power circuit that supplies drive voltage to the second light source drive circuit, a second head power circuit that supplies drive voltage to the second head drive circuit, and a second main controller that controls the second light source power circuit and the second head power circuit. A case of the first controller unit and a case of the second controller unit are constructed identically. The first electrical cable, the second electrical cable, and the third electrical cable are constructed identically. The first light source unit is selected from among multiple types of units having different drive voltages for the first light source drive circuit. The first light source unit is configured to receive a request signal from the first controller unit and transmit a response signal to the first controller unit. The first main controller outputs the request signal, determines whether the first light source unit is drivable based on the response signal, supplies power from the first light source power circuit to the first light source drive circuit when determining that the first light source unit is drivable, and does not supply power from the first light source power circuit to the first light source drive circuit when determining that the first light source unit is not drivable.

### Advantageous Effects of Invention

The laser processing device according to the present disclosure allows the connection state of units to be easily recognized.

### BRIEF DESCRIPTION OF DRAWINGS

Fig. 1 is a perspective view showing one embodiment of a laser processing device.
Fig. 2 is a block diagram illustrating the configuration of the laser processing device.
Fig. 3 is a diagram illustrating the connection of cables to the back panel of each unit.
Fig. 4 is a diagram illustrating controller unit patterns.
Fig. 5 is a diagram illustrating light source unit patterns.
Fig. 6 is a diagram illustrating head unit patterns.
Fig. 7 is a flowchart illustrating an initialization process for checking the connection of a unit.
Fig. 8 is a block diagram illustrating the configuration of another laser processing device.

### DESCRIPTION OF EMBODIMENTS

One embodiment of a laser processing device will now be described with reference to the drawings.

The embodiment described below exemplifies configurations and methods for embodying a technical concept without any intention to limit the material, shape, structure, arrangement, dimensions, and the like of each component. Elements in the figures are illustrated for simplicity and clarity and have not necessarily been drawn to scale. The accompanying drawings illustrate exemplary embodiments in accordance with the present disclosure and are not intended to limit the present disclosure. Terms such as "first", "second", and "third" in this disclosure are used to distinguish subjects and not used for ordinal purposes.

### Outline of Laser Processing Device

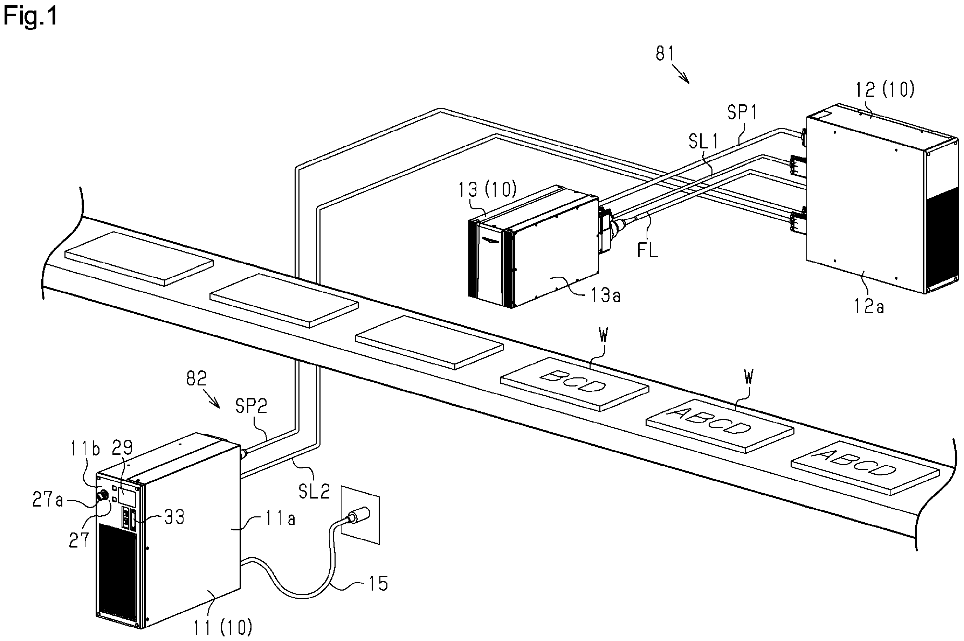

As shown in Fig. 1, the laser processing device 10 includes a controller unit 11, a light source unit 12, and a head unit 13. The light source unit 12 is connected by first electrical cables 81 and an optical fiber cable FL to the head unit 13. Further, the light source unit 12 is connected by second electrical cables 82 to the controller unit 11. The first electrical cables 81 include a first power cable SP1 and a first signal cable SL1. The second electrical cables 82 include a second power cable SP2 and a second signal cable SL2. The controller unit 11 is supplied with AC power by a power cable 15.

### Light Source Unit

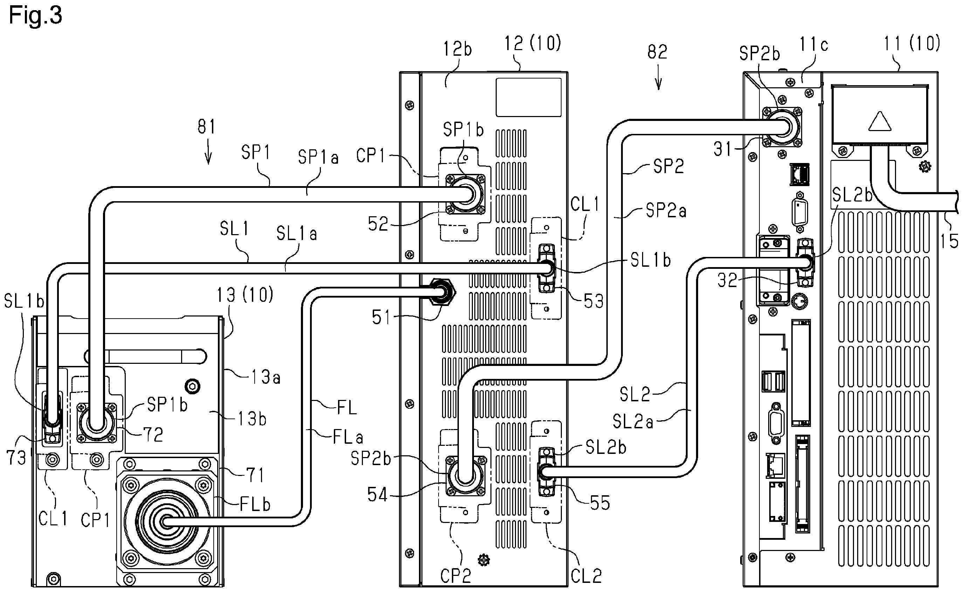

As shown in Figs. 1 and 3, the light source unit 12 includes a case 12a that is substantially box-shaped.

As shown in Fig. 3, the case 12a of the light source unit 12 includes a back panel 12b where connectors 51, 52, 53, 54, and 55 are arranged. The connectors 51, 52, and 53 connect the light source unit 12 to the head unit 13. The connectors 54 and 55 connect the light source unit 12 to the controller unit 11.

The connector 51 is a fiber cable connector for connecting the optical fiber cable FL, which is connected to the head unit 13, to the case 12a. The connector 51 is fixed to the back panel 12b of the case 12a. The optical fiber cable FL extends through the connector 51. Thus, the optical fiber cable FL extends out of the back panel 12b of the case 12a in an unremovable state.

The connectors 52 and 53 are cable connectors for connection of the first electrical cables 81 that connect the light source unit 12 and the head unit 13. The first electrical cables 81 include the first power cable SP1 and the first signal cable SL1. The first power cable SP1 is connected to the connector 52. The first signal cable SL1 is connected to the connector 53. The first power cable SP1 is connected in a removable manner to the connector 52. The first signal cable SL1 is connected in a removable manner to the connector 53.

The connectors 54 and 55 are cable connectors for connection of the second electrical cables 82 that connect the light source unit 12 and the controller unit 11. The second electrical cables 82 include the second power cable SP2 and the second signal cable SL2. The second power cable SP2 is connected to the connector 54. The second signal cable SL2 is connected to the connector 55. The second power cable SP2 is connected in a removable manner to the connector 54. The second signal cable SL2 is connected in a removable manner to the connector 55.

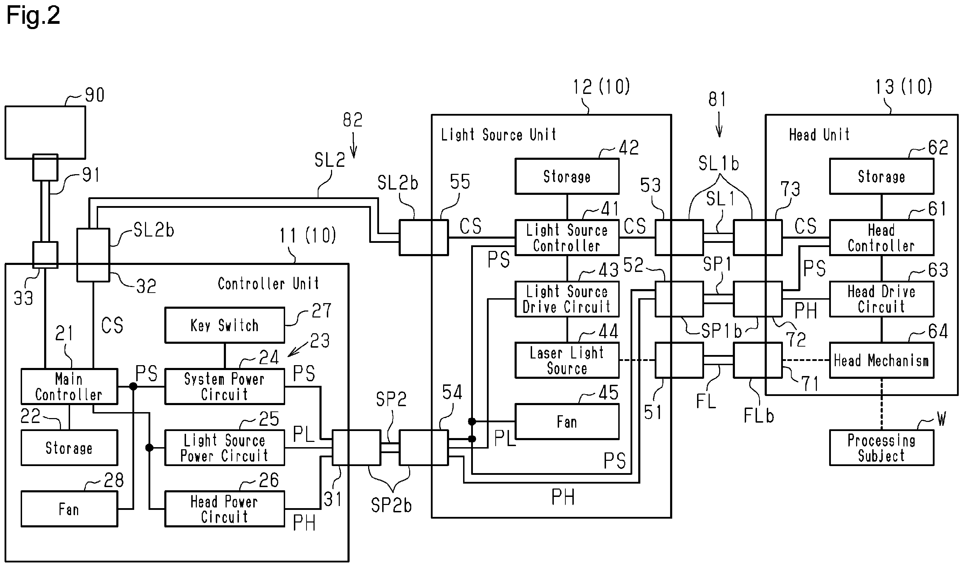

As shown in Fig. 2, in the case 12a, the light source unit 12 includes a light source controller 41, storage 42, a light source drive circuit 43, and a laser light source 44. The light source unit 12 also includes a fan 45 in the case 12a to cool the laser light source 44 and various electronic components.

The light source controller 41 controls the light source drive circuit 43 and the laser light source 44. The light source controller 41 exchanges a signal CS with an external device. The storage 42 stores identification information of the light source unit 12. The identification information includes model information (model) and unique information (serial number) of the light source unit 12.

The laser light source 44 emits a laser beam and may be, for example, a fiber laser, a YAG laser, a CO2 laser or the like.

The light source drive circuit 43 drives the laser light source 44.

As shown in Fig. 2, the light source controller 41 is electrically connected to the connector 54. The light source controller 41 is configured to be operated by system drive voltage PS that is supplied by the second power cable SP2, which is connected to the connector 54. Further, the light source controller 41 is electrically connected to the connectors 53 and 55. The light source controller 41 is configured to exchange the signal CS with the head unit 13 and the controller unit 11 through the signal cables SL1 and SL2, which are connected to the connectors 53 and 55. The light source drive circuit 43 is electrically connected to the connector 54. The light source drive circuit 43 is configured to be operated by light source drive voltage PL that is supplied by the second power cable SP2, which is connected to the connector 54.

### Head Unit

As shown in Figs. 1 and 3, the head unit 13 includes a case 13a that is substantially box-shaped.

As shown in Fig. 3, the case 13a of the head unit 13 includes a back panel 13b where connectors 71, 72, and 73 are arranged. The connectors 71 to 73 are for connection of the head unit 13 to the light source unit 12.

The connector 71 is a fiber cable connector for connection of the optical fiber cable FL. The optical fiber cable FL includes a head connector FLb. The head connector FLb is connected in a removable manner to the connector 71 of the head unit 13.

The connectors 72 and 73 are cable connectors for connection of the first electrical cables 81 that connect the light source unit 12 and the head unit 13. The first electrical cables 81 include the first power cable SP1 and the first signal cable SL1. The first power cable SP1 is connected to the connector 72. The first signal cable SL1 is connected to the connector 73. The first power cable SP1 is connected in a removable manner to the connector 72. The first signal cable SL1 is connected in a removable manner to the connector 73.

As shown in Fig. 2, in the case 13a, the head unit 13 includes a head controller 61, storage 62, a head drive circuit 63, and a head mechanism 64. The head unit 13 may include a converging lens, an fθ lens, or the like.

The head controller 61 controls the head drive circuit 63 and the head mechanism 64. The head controller 61 exchanges the signal CS with an external device. The storage 62 stores the identification information of the head unit 13. The identification information includes model information (model) and unique information (serial number) of the head unit 13.

The head mechanism 64 is constructed to emit the laser beam generated by the laser light source 44 out of the head unit 13.

The head mechanism 64 includes a laser operation unit. The laser scanner scans the laser beam. The laser scanner includes, for example, two galvanometer mirrors and an actuator that drives the two galvanometer mirrors. The head drive circuit 63 drives the laser scanner. The head controller 61 controls the actuator. The head controller 61 controls and drives the two galvanometer mirrors with the actuator of the scanner to scan the laser beam over a processing surface of a processing subject W in two directions (two-dimensional directions).

The head mechanism 64 may include a mechanism that adjusts the focal length of the laser beams emitted toward the processing subject W. The mechanism for adjusting the focal distance includes lenses, which are laid out on the optical axis of the laser beam, and an actuator, which moves the lenses in the direction of the optical axis. The head drive circuit 63 controls the actuator to control the positions of the lenses. The positions of the lenses (the distance between the lenses) adjust the focal distance (focal point position) of the emitted laser beam.

Further, the head mechanism 64 may include a mechanism that switches the laser beam on and off. This mechanism includes, for example, a shutter and an actuator that drives the shutter. The shutter is supported to be movable between a closed position, where the shutter blocks the laser beam, and an open position, where the shutter does not block the laser beam. The actuator switches the shutter between the closed position and the open position.

The head controller 61 is electrically connected to the connector 72. The head controller 61 is configured to be operated by the system drive voltage PS that is supplied by the first power cable SP1 connected to the connector 72. Further, the head controller 61 is electrically connected to the connector 73. The head controller 61 is configured to exchange the signal CS with the head unit 13 and the controller unit 11 through the first signal cable SL1, which is connected to the connector 73, and the second signal cable SL2, between the light source unit 12 and the controller unit 11. The head drive circuit 63 is electrically connected to the connector 72. The head drive circuit 63 is configured to be operated by head drive voltage PH that is supplied by the first power cable SP1 connected to the connector 72.

### Controller Unit

As shown in Figs. 1 and 3, the controller unit 11 includes a case 11a that is substantially box-shaped.

As shown in Fig. 3, the case 11a of the controller unit 11 includes a back panel 11c where connectors 31 and 32 are arranged. The connectors 31 and 32 are for connection of the light source unit 12 to the controller unit 11.

The connectors 31 and 32 are cable connectors for connection of the second electrical cables 82. The second electrical cables 82 include the second power cable SP2 and the second signal cable SL2. The second power cable SP2 is connected to the connector 31. The second signal cable SL2 is connected to the connector 32. The second power cable SP2 is connected in a removable manner to the connector 31. The second signal cable SL2 is connected in a removable manner to the connector 32.

As shown in Fig. 3, the signal cable SL1 includes a cable body SL1a and connectors SL1b arranged on the two ends of the cable body SL1a. The signal cable SL2 includes a cable body SL2a and connectors SL2b arranged on the two ends of the cable body SL2a. The power cable SP1 includes a cable body SP1a and connectors SP1b arranged on the two ends of the cable body SP1a. The power cable SP2 includes a cable body SP2a and connectors SP2b arranged on the two ends of the cable body SP2a. The optical fiber cable FL includes a cable body FLa and the head connector FLb arranged on one end of the cable body FLa.

The first power cable SP1, the first signal cable SL1, and the optical fiber cable FL have the same length. The phrase "the same length" indicates that the length is substantially the same in terms of specifications and that there may be differences resulting from manufacturing errors. Thus, the first power cable SP1, the first signal cable SL1, and the optical fiber cable FL may be arranged in the same wiring route (layout). That is, the first power cable SP1, the first signal cable SL1, and the optical fiber cable FL may be laid out collectively.

The second power cable SP2 and the second signal cable SL2 have the same length. Thus, the second power cable SP2 and the second signal cable SL2 may be arranged in the same wiring route (layout). That is, the second power cable SP2 and the second signal cable SL2 may be laid out collectively.

The first power cable SP1 and the second power cable SP2 are constructed identically. In detail, the first power cable SP1 and the second power cable SP2 include the same number of power wires. The connectors SP1b of the first power cable SP1 and the connectors SP2b of the second power cable SP2 have the same structure.

The first signal cable SL1 and the second signal cable SL2 are constructed identically. In detail, the first signal cable SL1 and the second signal cable SL2 include the same number of signal wires. The connectors SL1b of the first signal cable SL1 and the connectors SL2b of the second signal cable SL2 have the same structure.

The connectors SL1b and SP1b connected to the light source unit 12 are covered by waterproof connector covers CL1 and CP1, which are attached to the light source unit 12. Further, the connectors SL2b and SP2b connected to the light source unit 12 are covered by the waterproof connector covers CL2 and CP2, which are attached to the light source unit 12. The waterproof connector covers CL1, CP1, CL2, and CP2 prevent the entry of liquid into the connectors SL1b, SP1b, SL2b, and SP2b.

Waterproof connector covers CL1 and CP1 are attached to the connectors SL1b and SP1b that are connected to the head unit 13. The waterproof connector covers CL1 and CP1 prevent the entry of liquid into the connectors SL1b and SP1b. The head connector FLb includes a seal ring so that the optical fiber cable FL is waterproof. The seal ring prevents the entry of water between the head connector FLb and the connector 71 of the head unit 13.

As shown in Fig. 2, in the case 11a, the controller unit 11 includes a main controller 21, storage 22, and a power supply 23. As shown in Fig. 1, the controller unit 11 includes a key switch 27, a display 29, and a connector 33 on a front panel 11b of the case 11a. As shown in Fig. 2, the controller unit 11 also includes a fan 28 to cool the power supply 23 and various electronic components in the case 11a.

The key switch 27 is a power switch used to activate and deactivate the controller unit 11. An operator rotates a power key 27a, which is shown in Fig. 1, to turn on and turn off the key switch 27.

The display 29 is used to show the state of the laser processing device 10. The display 29 includes light-emitting diodes (LEDs). The LEDs indicate the state of the laser processing device 10. The state of the laser processing device 10 is indicated to the outside by the display 29 through the state of the LEDs (color, flashing, and the like). The connector 33 is used to connect a setting terminal 90 to the controller unit 11.

The power supply 23 is connected by the power cable 15, which is shown in Figs. 1 and 3, to an external power supply, such as a commercial power supply. The power supply 23 supplies power to the controller unit 11, the light source unit 12, and the head unit 13 of the laser processing device 10.

The power supply 23 includes a system power circuit 24, a light source power circuit 25, and a head power circuit 26.

The system power circuit 24 supplies the main controller 21 with the system drive voltage PS. The key switch 27 is turned on and off so that the system power circuit 24 supplies and stops supplying the system drive voltage PS. The system drive voltage PS is supplied to the main controller 21. The system drive voltage PS is supplied by the second power cable SP2 to the light source controller 41 of the light source unit 12. Further, the system drive voltage PS is supplied by the first power cable SP1 from the light source unit 12 to the head controller 61 of the head unit 13. Thus, the controllers 21, 41, and 61 of the units 11, 12, and 13 are operated by the system drive voltage PS, which is supplied when the key switch 27 is turned on.

The light source power circuit 25 supplies the light source drive voltage PL to the light source drive circuit 43 of the light source unit 12. The light source power circuit 25, which is controlled by the main controller 21, outputs or stops outputting the light source drive voltage PL.

The head power circuit 26 supplies the head drive circuit 63 of the head unit 13 with the head drive voltage PH. The head power circuit 26, which is controlled by the main controller 21, outputs or stops outputting the head drive voltage PH.

The light source power circuit 25 is modularized and accommodated in the case 11a of the controller unit 11. The light source power circuit 25 is configured to be attached in a removable manner to the controller unit 11. The light source power circuit 25 is arranged in the controller unit 11 and selected in accordance with the light source unit 12 connected to the controller unit 11.

The head power circuit 26 is modularized and accommodated in the case 11a of the controller unit 11. The head power circuit 26 is configured to be attached in a removable manner to the controller unit 11. The head power circuit 26 is arranged in the controller unit 11 and selected in accordance with the head unit 13 connected to the light source unit 12.

The storage 22 stores information (voltage, power) of the light source drive voltage PL as output information of the light source power circuit 25 accommodated in the controller unit 11. Further, the storage 22 stores information (voltage, power) of the head drive voltage PH as output information of the head power circuit 26 accommodated in the controller unit 11.

The storage 22 also stores identification information of the units connected to the controller unit 11. Further, the storage 22 stores the drive voltage of each unit in association with the identification information. As described above, the units include multiple types of the light source unit 12. The storage 22 stores the identification information (model information, unique information) of the multiple types of the light source unit 12.

The laser light source 44 and the light source drive circuit 43, which drives the laser light source 44, are installed in each of the multiple types of the light source unit 12. The light source drive circuit 43 is operated by a drive voltage. That is, each of the multiple types of the light source unit 12 has a drive voltage set for the installed light source drive circuit 43. The storage 22 stores information of the drive voltage of the light source drive circuit 43 in association with the identification information (model information) of the multiple types of the light source unit 12.

The storage 22 stores information (voltage, power) of the head drive voltage PH as output information of the head power circuit 26 accommodated in the controller unit 11. Further, the storage 22 stores information (voltage, power) of the head drive voltage PH as output information of the head power circuit 26 accommodated in the controller unit 11.

The storage 22 also stores identification information of the units connected to the controller unit 11. Further, the storage 22 stores the drive voltage of each unit in association with the identification information. As described above, the units include multiple types of the head unit 13. The storage 22 stores the identification information (model information, unique information) of the multiple types of the head unit 13.

The head mechanism 64 and the head drive circuit 63, which drives the head mechanism 64, are installed in each of the multiple types of the head unit 13. The head drive circuit 63 is operated by a drive voltage. That is, each of the multiple types of the head unit 13 has a drive voltage set for the installed head drive circuit 63. The storage 22 stores information of the drive voltage of the head drive circuit 63 in association with the identification information (model information) of the multiple types of the head unit 13.

As shown in Figs. 1 and 2, the controller unit 11 includes the connector 33 on the front panel 11b of the case 11a. As shown in Fig. 2, the setting terminal 90 is connected to the connector 33.

The setting terminal 90, which is, for example, a general-purpose terminal such as a tablet terminal, a laptop computer, a personal digital assistant (PDA), or a smartphone, downloads dedicated application software to allow for setting of the laser processing device 10. In one example, the setting terminal 90 includes an input unit, which allows a user to input data, a display unit, which shows various information, and a control unit, which controls each unit. The setting terminal 90 is configured to communicate with the controller unit 11 through a cable 91. The setting terminal 90 instructs the controller unit 11 to perform various controls in accordance with the operation of the input unit such as processing initiation and processing termination.

### Combination of Units

The light source unit 12 is selected from among multiple types of light source units 12. Multiple types of light source units 12 are prepared to cope with the diversity of processing subjects W. The multiple types of light source units 12 differ from one another in, for example, the output level of the emitted laser beam. Further, in accordance with the output level, the multiple types of light source units 12 differ from one another in the drive voltage and the drive power. Thus, each of the multiple types of light source units 12 includes a different combination of the laser light source 44 and the light source drive circuit 43.

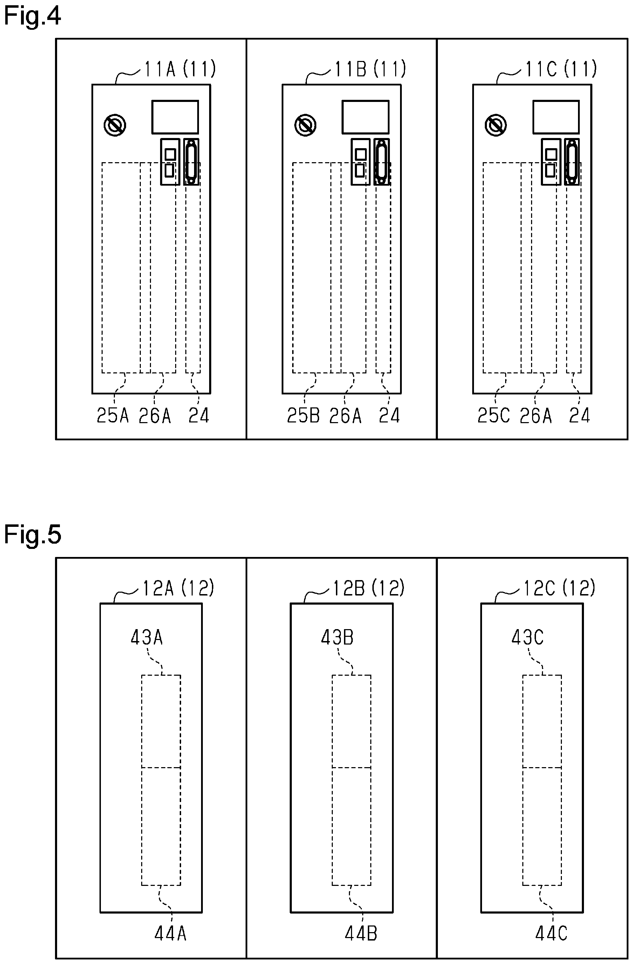

Fig. 5 shows three light source units 12A, 12B, and 12C. The light source unit 12A includes a laser light source 44A and a light source drive circuit 43A that drives the laser light source 44A. The light source unit 12B includes a laser light source 44B and a light source drive circuit 43B that drives the laser light source 44B. The light source unit 12C includes a laser light source 44C and a light source drive circuit 43C that drives the laser light source 44C.

The model information differs between the light source units 12A, 12B, and 12C. For example, the model information of "LA," "LB," and "LC" are respectively set for the light source units 12A, 12B, and 12C. The model information is stored in the storage 42 (refer to Fig. 2) of each of the light source units 12A, 12B, and 12C. The light source unit 12A has a drive voltage of 24 V and a drive power of 100 W. The light source unit 12B has a drive voltage of 24 V and a drive power of 300 W. The light source unit 12C has a drive voltage of 48 V and a drive power of 300W.

The light source drive circuit 43 is installed in the controller unit 11 and configured to output the voltage and power corresponding to each of the light source units 12A, 12B, and 12C.

Fig. 4 shows controller units 11A, 11B, and 11C including light source power circuits 25A, 25B, and 25C corresponding to the light source units 12A, 12B, and 12C, respectively. The storage 22 (refer to Fig. 2) of each of the controller units 11A, 11B, and 11C stores identification information of the light source units 12A, 12B, and 12C corresponding to the installed light source power circuits 25A, 25B, and 25C in association with output information of the light source power circuits 25A, 25B, and 25C. In one example, the storage 22 of the controller unit 11 may store the identification information of one or more light source units 12 corresponding to the light source power circuit 25 installed in the controller unit 11 in association with the output information of the light source power circuit 25. The output information of the light source power circuits 25A, 25B, and 25C is the drive voltage information (voltage, power) of the light source drive voltage PL output by the light source power circuits 25A, 25B, and 25C.

The head unit 13 is selected from among multiple types of head units 13. Multiple types of head units 13 are prepared to cope with the diversity of processing subjects W. The multiple types of head units 13, for example, differ from one another in the drive voltage of the head mechanism 64.

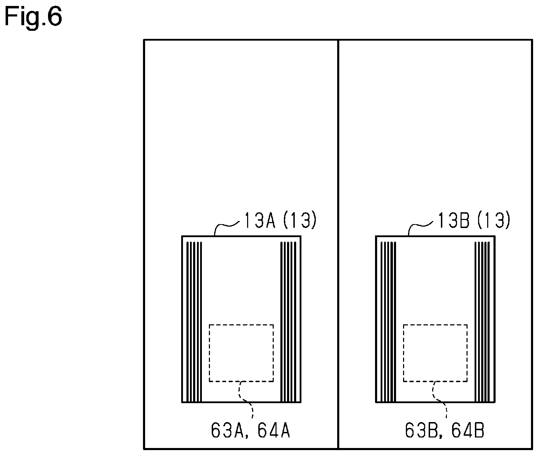

Fig. 6 shows two head units 13A and 13B. The head unit 13A includes a head mechanism 64A and a head drive circuit 63A that drives the head mechanism 64A. The head unit 13B includes a head mechanism 64B and a head drive circuit 63B that drives the head mechanism 64B.

The model information differs between the head units 13A and 13B. For example, the model information of "HA" and "HB" are respectively set for the head units 13A and 13B. The model information is stored in the storage 62 (refer to Fig. 2) of each of the head units 13A and 13B. The head unit 13A has a drive voltage of 24 V. The head unit 13B has a drive voltage of 15 V.

The head drive circuit 63 is installed in the controller unit 11 and configured to output the voltage and power corresponding to each of the head units 13A and 13B.

In the state shown in Fig. 4, the controller units 11A, 11B, and 11C include the light source drive circuit 43A corresponding to the head unit 13A. The storage 22 (refer to Fig. 2) of each of the controller units 11A, 11B, and 11C stores identification information of the head unit 13A corresponding to the installed head power circuit 26A in association with the head power circuit 26A. In one example, the storage 22 of the controller unit 11 may store the identification information of one or more head units 13 corresponding to the head power circuit 26 installed in the controller unit 11 in association with the output information of the head power circuit 26.

A head power circuit 26B corresponding to the head unit 13B may also be installed in the controller units 11A, 11B, and 11C. In this case, the storage 22 (refer to Fig. 2) of each the controller units 11A, 11B, and 11C stores identification information (model information) of the head unit 13B corresponding to the head power circuit 26B in association with the drive voltage information of the head drive circuit 63.

### Process Executed by Main Controller

The main controller 21, when supplied with the system drive voltage PS, executes a main process after an initialization process, which is executed when activated.

The main process includes irradiating the processing subject W with a laser beam based on processing data. Based on the processing data related to the characters that are to be engraved, the main controller 21 generates scan position data (coordinate data), which corresponds to processing positions on the processing subject W, and laser on/off data. The main controller 21 transmits the control data through the second signal cable SL2 to the light source controller 41 of the light source unit 12. The light source controller 41 of the light source unit 12 acquires laser on/off data related to the light source unit 12 from the transmitted control data. Further, the light source controller 41 transmits the control data through the first signal cable SL1 to the head controller 61 of the head unit 13. The head controller 61 of the head unit 13 acquires the scan position data related to the head unit 13 from the transmitted control data.

The initialization process checks the configuration of the laser processing device 10 and supplies the drive voltages PL and PH to the light source unit 12 and the head unit 13, which are connected to the controller unit 11.

The main controller 21 of the controller unit 11 determines whether the light source unit 12, which is connected to the controller unit 11, is drivable. Further, the main controller 21 determines whether the head unit 13, which is connected to the controller unit 11 via the light source unit 12, is drivable. Based on the determination result, the main controller 21 controls the light source power circuit 25 and the head power circuit 26 to supply or stop supplying the drive voltages PL and PH. The main controller 21 indicates the determination result. The determination result is indicated, for example, through the state of the LEDs (color, flashing, and the like) on the display 29. The determination result may be indicated on the setting terminal 90 shown in Fig. 2.

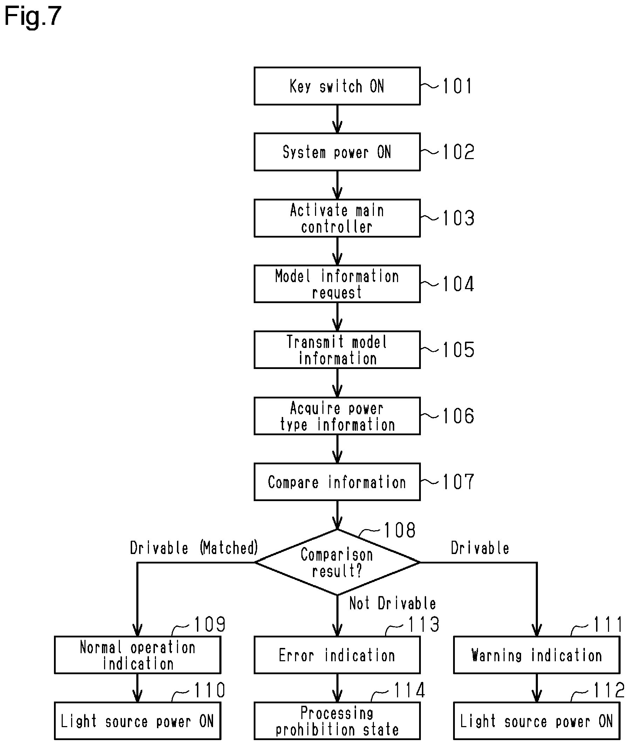

Fig. 7 is a flowchart illustrating a process related to power activation of the controller unit 11.

When the key switch 27 is turned on (step 101), the system power circuit 24 is activated (step 102). The activated system power circuit 24 outputs the system drive voltage PS. As shown in Fig. 2, the system drive voltage PS is supplied to the main controller 21 of the controller unit 11. The main controller 21 is activated when supplied with the system drive voltage PS (step 103).

As shown in Fig. 2, the system drive voltage PS is supplied to the light source controller 41 of the light source unit 12. The light source controller 41 is activated when supplied with the system drive voltage PS.

The activated main controller 21 requests model information (step 104). The main controller 21 outputs a request signal. The request signal is transmitted through the second signal cable SL2 shown in Fig. 2 to the light source controller 41.

In response to the request signal from the main controller 21, the light source controller 41 transmits a response signal including the identification information (model information, unique information) read from the storage 42 (step 105).

The main controller 21 acquires power type information (step 106). In detail, the main controller 21 receives the request signal from the light source controller 41 and extracts identification information from the request signal. The main controller 21 compares the model information of the light source unit 12 included in the identification information with the identification information (model information) stored in the storage 22. In one example, the main controller 21 may compare the model information of the light source unit 12 included in the identification information of the request signal with the identification information (model information) of one or more light source units 12 stored in the storage 22. The main controller 21 acquires the drive voltage information associated with the model information of the storage 22 that matches the model information of the requested information.

The main controller 21 performs information comparison (step 107). The main controller 21 compares the drive voltage information of the power circuit acquired from the storage 22 with drive voltage information of the light source drive circuit 43 of the connected light source unit 12.

The main controller 21 determines the comparison result (step 108). The main controller 21 determines whether the drive voltage information of the light source drive circuit 43 matches the drive voltage information of the light source power circuit 25. The matching of information indicates that the drive voltage and power of the light source drive circuit 43 match the drive voltage and power of the light source drive voltage PL output from the light source power circuit 25. When "drivable (matched)," the main controller 21 determines that the light source unit 12 can be driven and proceeds to step 109.

In step 109, the main controller 21 performs a "normal operation indication" on the display 29 shown in Fig. 1. The normal operation indication indicates that the light source unit 12 is ready for operation. The main controller 21, for example, illuminates an LED, which is located at a predetermined position, in green. The main controller 21 may use the setting terminal 90, which is connected to the controller unit 11, to show a character string or a code representing "normal operation indication." Then, the main controller 21 turns on the light source power (step 110). In detail, the main controller 21 controls the light source power circuit 25 to output the light source drive voltage PL.

When determining in step 108 that the drive voltage information of the light source drive circuit 43 does not match the drive voltage information of the light source power circuit 25, the main controller 21 determines whether the light source unit 12 is drivable. The light source drive circuit 43 can be operated by the light source drive voltage PL if the light source drive voltage PL output by the light source power circuit 25 is less than or equal to the drive voltage of the light source drive circuit 43 and in an operable voltage range of the light source drive circuit 43. The operable voltage range of the light source drive circuit 43 is set as specified for the light source drive circuit 43. In this manner, even if the voltage information does not match, the light source drive circuit 43, namely, the light source unit 12, can be operated. In this case, the main controller 21 gives a "drivable" determination and proceeds to step 111.

In step 111, the main controller 21 performs a "warning indication" on the display 29 shown in Fig. 1. The warning indication indicates that the model information does not match but the light source unit 12 is ready for operation. The main controller 21 illuminates the above-described LED located at the predetermined position in a state differing from the state of "normal operation" by, for example, illuminating it in "yellow." The main controller 21 may use the setting terminal 90, which is connected to the controller unit 11, to show a character string or a code representing "warning indication." Then, the main controller 21 turns on the light source power (step 112). In detail, the main controller 21 controls the light source power circuit 25 to output the light source drive voltage PL.

When determining in step 108 that the drive voltage information of the light source drive circuit 43 does not match the drive voltage information of the light source power circuit 25 and that the light source drive voltage PL is greater than the drive voltage of the light source drive circuit 43, the main controller 21 determines that there is an "error." Then, the main controller 21 proceeds to step 113.

In step 113, the main controller 21 performs an "error indication" on the display 29 shown in Fig. 1. The error indication indicates that the light source unit 12 is not ready for operation. The main controller 21 illuminates the above-described LED located at the predetermined position in a state differing from "normal operation indication" and "warning indication" by, for example, illuminating it in "red." Then, the main controller 21 sets a processing prohibition state. The processing prohibition state includes a state in which the light source unit 12 is not supplied with the light source drive voltage PL. This state includes a situation in which when a processing initiation operation is performed on the input unit or the like of the setting terminal 90, such an operation is invalidated. The main controller 21 may use the setting terminal 90, which is connected to the controller unit 11, to show a character string or a code representing "error indication." The main controller 21 may use the setting terminal 90, which is connected to the controller unit 11, to show a character string or a code representing the "processing prohibition state."

As described above, the main controller 21 determines whether the light source unit 12 is drivable.

A process for recognizing the light source unit 12 has been described with the flowchart illustrated in Fig. 7. A process for recognizing the head unit 13 is the same as the process for recognizing the light source unit 12. The main controller 21 performs the process on the head unit 13 in the same manner as the process performed on the light source unit 12 to determine whether the head unit 13 is drivable.

The laser processing device 10 described above is constructed by connecting the light source unit 12 and the head unit 13 with the first electrical cables 81 and connecting the controller unit 11 and the light source unit 12 with the second electrical cables 82. Thus, the laser processing device 10 is constructed by connecting three units.

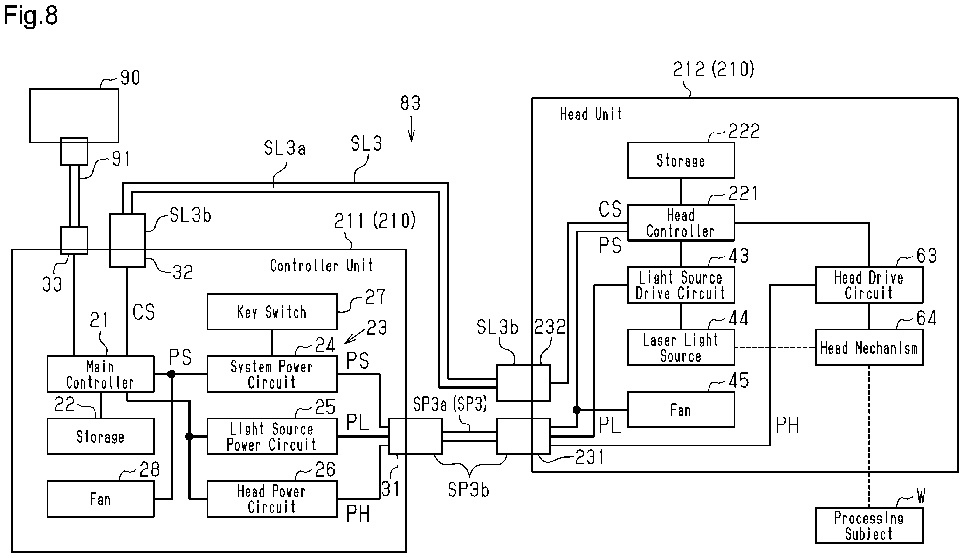

Fig. 8 shows a laser processing device 210 constructed by connecting two units. The laser processing device 210 includes a controller unit 211, a head unit 212, and third electrical cables 83 connecting the controller unit 211 and the head unit 212.

The controller unit 211 has the same configuration as the controller unit 11 of the laser processing device 10. More specifically, the case of the controller unit 211 is constructed identically to the case 11a of the controller unit 11. Further, in the same manner as the controller unit 11 described above, the controller unit 211 includes the main controller 21, the storage 22, the power supply 23 (system power circuit 24, light source power circuit 25, and head power circuit 26), the key switch 27, the fan 28, and the display 29.

The head unit 212 includes a head controller 221, a storage 222, the light source drive circuit 43, the laser light source 44, the fan 45, the head drive circuit 63, and the head mechanism 64. The light source drive circuit 43, the laser light source 44, and the fan 45 are constructed in the same manner as those of the light source unit 12 shown in Fig. 2. The head drive circuit 63 and the head mechanism 64 are constructed in the same manner as those of the head unit 13 shown in Fig. 2. The head controller 221 has the functionalities of the light source controller 41 and the head controller 61 shown in Fig. 2. The storage 222 stores the information stored in storage 42 and 62, which are shown in Fig. 2.

The head unit 212 includes connectors 231 and 232 on its case. The connectors 231 and 232 are for connection of the third electrical cables 83. The third electrical cables 83 are constructed identically to the first electrical cables 81 and the second electrical cables 82. More specifically, the third electrical cables 83 include a third power cable SP3 and a third signal cable SL3. The third power cable SP3 is connected to the connector 31 of the controller unit 211 and the connector 231 of the head unit 212. The third signal cable SL3 is connected to the connector 32 of the controller unit 211 and the connector 232 of the head unit 212.

In the same manner as the power cables SP1 and SP2, the third power cable SP3 includes a cable body SP3a and connectors SP3b arranged on the two ends of the cable body SP3a. In the same manner as the signal cables SL1 and SL2, the third signal cable SL3 includes a cable body SL3a and connectors SL3b arranged on the two ends of the cable body SL3a.

The third power cable SP3 is constructed identically to the first power cable SP1 and the second power cable SP2. The third signal cable SL3 is constructed identically to the first signal cable SL1 and the second signal cable SL2.

### Operation

The operation of the laser processing device 10 will now be described.

When a processing initiation operation is performed, the main controller 21, for example, converts the processing data set by the setting terminal 90 into control data. The light source controller 41 controls the light source drive circuit 43 based on the control data so that the laser light source 44, which is driven by the light source drive circuit 43, emits a laser beam. The head controller 61 controls the head drive circuit 63 based on the control data so that the head mechanism 64, which is driven by the head drive circuit 63, irradiates and scans the processing subject W with the laser beam. As a result, the laser processing device 10 processes the processing subject W with the emitted laser beam.

The laser processing device 10 is constructed by connecting the controller unit 11, the light source unit 12, and the head unit 13 with the first electrical cables 81 and the second electrical cables 82. This facilitates replacement of the light source unit 12 and the head unit 13.

The first electrical cables 81 and the second electrical cables 82 are constructed identically. This simplifies the construction as compared to when electric cables of different constructions are prepared. Additionally, the burden for preparing electric cables of different constructions is eliminated.

Further, the first electrical cables 81 and the second electrical cables 82 are constructed identically. Thus, the controller unit 11 and the light source unit 12 can be connected by the first electrical cables 81 in the connection states described above. This facilitates assembling compared with when using electrical cables of different constructions since an operator does not have to distinguish the first electrical cables 81 from the second electrical cables 82.

The controller unit 11 of the laser processing device 10 constructed by three units and the controller unit 11 of the laser processing device 10 constructed by two units have the same main part (part excluding light source power circuit 25 and head power circuit 26). This simplifies the construction in comparison with when using controller units 11 of different constructions.

More than one of the laser processing device 10 shown in Figs. 1 to 3 may be implemented. The diversity adaptability or the like allows the laser processing devices 10 to use different types of light source units 12. For example, one of the laser processing devices 10 includes the controller unit 11A, the light source unit 12A, and the head unit 13A shown in Figs. 4 to 6. Another one of the laser processing devices 10 includes the controller unit 11C, the light source unit 12C, and the head unit 13A shown in Figs. 4 to 6. The light source unit 12B may be inadvertently connected to the controller unit 11A.

In this case, the main controller 21 of the controller unit 11A may determine from the identification information (model information) of the connected light source unit 12C that the light source drive voltage PL for the light source power circuit 25A of the controller unit 11A is less than or equal to the drive voltage for the light source drive circuit 43 of the light source unit 12C and less than the operable voltage range of the light source drive circuit 43. Thus, the main controller 21 executes control so that the light source drive voltage PL is not output from the light source power circuit 25. This prevents the light source drive circuit 43 from becoming unstable due to the low light source drive voltage PL.

Further, the main controller 21 of the controller unit 11C may determine from the identification information (model information) of the connected light source unit 12A that the light source drive voltage PL for the light source power circuit 25C of the controller unit 11C is greater than that specified for the light source drive circuit 43 of the light source unit 12C. Thus, the main controller 21 executes control so that the light source drive voltage PL is not output from the light source power circuit 25. This prevents the light source drive circuit 43 from being supplied with light source drive voltage PL that is greater than the specified voltage.

The laser processing device 10 shown in Figs. 1 to 3 and the laser processing device 210 shown in Fig. 8 may be implemented as a result of, for example, adaptability. In this case, the third electrical cables 83 of the laser processing device 210 are constructed identically to the first electrical cables 81 and the second electrical cables 82 of the laser processing device 10. Thus, cables do not have to be distinguished from one another. This facilitates assembly of the laser processing devices 10 and 210. Since the electrical cables have the same construction, the light source unit 12 shown in Fig. 2 may be inadvertently connected to the controller unit 211 shown in Fig. 8. In the same manner, the head unit 212 shown in Fig. 8 may be inadvertently connected to the controller unit 11 shown in Fig. 2. Even in such cases, the main controller 21 of each of the controller units 11 and 211 recognizes that the light source unit 12 and the head units 13 and 212 are connected from the identification information (model information). This prevents the light source drive circuit 43 from becoming unstable and prevents the light source drive circuit 43 from being supplied with a light source drive voltage PL that is higher that the specified voltage.

### Advantages

As described above, the laser processing device 10 has the advantages described below.
(1) The laser processing device 10 is constructed by connecting the controller unit 11, the light source unit 12, and the head unit 13 with the first electrical cables 81, the second electrical cables 82, and the optical fiber cable FL. The light source unit 12 includes the laser light source 44, which emits a laser beam, the light source drive circuit 43, which drives the laser light source 44, and the light source controller 41. The light source controller 41 is configured to transmit a response signal in response to a request signal. The controller unit 11 includes the light source power circuit 25 that supplies the light source drive circuit 43 with the light source drive voltage PL. The main controller 21 of the controller unit 11 transmits the request signal and determines from the received response signal whether the light source unit 12 is drivable. When determining that the light source unit 12 is drivable, the main controller 21 supplies the light source drive voltage PL from the light source power circuit 25 to the light source drive circuit 43. When determining that the light source unit 12 is not drivable, the main controller 21 does not supply the light source drive voltage PL from the light source power circuit 25 to the light source drive circuit 43.
   With this configuration, the light source power circuit 25 of the controller unit 11 supplies the light source drive circuit 43 of the light source unit 12 corresponding to the light source power circuit 25 with the appropriate light source drive voltage PL to drive the light source drive circuit 43. A non-corresponding light source unit 12 is not supplied with the light source drive voltage PL. This prevents the light source drive circuit 43 from being supplied with a light source drive voltage PL that is greater than the specified voltage. In this manner, since the light source unit 12 is not supplied with a light source drive voltage PL that is greater than the specified voltage, damage to the light source drive circuit 43, the laser light source 44, and the like of the light source unit 12 can be prevented.
(2) The head unit 13 includes the head mechanism 64, which irradiates the processing subject W with the laser beam, and the head drive circuit 63, which drives the head mechanism 64. The controller unit 11 includes the head power circuit 26 that supplies the head drive circuit 63 with the head drive voltage PH. The main controller 21 of the controller unit 11 transmits a request signal and determines from a received response signal whether the head unit 13 is drivable. When determining that the head unit 13 is drivable, the main controller 21 supplies the head drive voltage PH from the head power circuit 26 to the head drive circuit 63. When determining that the head unit 13 is not drivable, the main controller 21 does not supply the head drive voltage PH from the head power circuit 26 to the light source drive circuit 43.
   With this configuration, the head power circuit 26 of the controller unit 11 supplies the head drive circuit 63 of the head unit 13 corresponding to the head power circuit 26 with the appropriate head drive voltage PH to drive the head drive circuit 63. A non-corresponding head unit 13 is not supplied with the head drive voltage PH. This prevents the head drive circuit 63 from being supplied with a head drive voltage PH that is greater than the specified voltage. In this manner, since the head unit 13 is not supplied with a head drive voltage PH that is greater than the specified voltage, damage to the head drive circuit 63, the head mechanism 64, and the like of the head unit 13 can be prevented.
(3) When the drive voltage information of the light source drive circuit 43 does not match the drive voltage information of the light source power circuit 25, the main controller 21 determines whether the light source unit 12 is drivable. The light source drive circuit 43 can be operated by the light source drive voltage PL if the light source drive voltage PL output by the light source power circuit 25 is less than or equal to the drive voltage of the light source drive circuit 43 and in an operable voltage range of the light source drive circuit 43. In this manner, even if the voltage information does not match, the light source drive circuit 43, namely, the light source unit 12, can be operated.
(4) The controller unit 11 includes the display 29. The main controller 21 compares the drive voltage information of the light source drive circuit 43 with the drive voltage information of the light source power circuit 25 and, in accordance with the comparison result, performs a "normal operation indication," "warning indication," or "error indication" on the display 29. This allows the state of the light source unit 12 that is connected to the controller unit 11 to be easily checked. Further, this allows for easy determination of whether a reconnecting task is necessary.
(5) The light source unit 12 and the head unit 13 are connected by the first power cable SP1, the first signal cable SL1, and the optical fiber cable FL. This allows the routing paths of the cables SP1, SL1, and FL to be the same. Further, the routing path of the cables SP1, SL1, and FL can be simplified, and the degree of layout freedom can be increased.
(6) The light source unit 12 and the controller unit 11 are connected by the second power cable SP2 and the second signal cable SL2. This allows the routing paths of the cables SP2 and SL2 to be the same. Further, the routing path of the cables SP2 and SL2 can be simplified, and the degree of layout freedom can be increased.
(7) The first electrical cables 81 and the second electrical cables 82 are constructed identically. This simplifies the construction in comparison with when electric cables of different constructions are prepared. Additionally, the burden for preparing electric cables of different constructions is eliminated.
(8) The first electrical cables 81 and the second electrical cables 82 are constructed identically. Thus, the controller unit 11 and the light source unit 12 can be connected by the first electrical cables 81 in the connection states described above. This facilitates assembling compared with when using electrical cables of different constructions since an operator does not have to distinguish the first electrical cables 81 from the second electrical cables 82.

### Modified Examples

The description related with the above embodiment exemplifies, without any intention to limit, applicable forms of a laser processing device according to the present disclosure. In addition to the embodiment, the present disclosure is applicable to, for example, modified examples of the above embodiment that are described below and combinations of at least two of the modified examples that are consistent with each other.

In the above embodiment, the optical fiber cable FL cannot be removed from the connector 51 but instead can be removable (attachable and detachable).

In the above embodiment, the setting terminal 90 does not have to be wire-connected to the connector 33 of the controller unit 11. The setting terminal 90 may be configured to communicate with an external device through a wireless communication protocol such as Wi-Fi, Bluetooth (registered trademark), Near Field Communication(NFC), or the like. Any one of the light source unit 12, the head unit 13, and the controller unit 11 may be configured to perform communication in compliance with the same communication protocol as the setting terminal 90. This eliminates the need for connecting the cable 91. Thus, tasks for routing and attachment/detachment of the cable 91 do not have to be performed, and user convenience is improved. Further, the head unit 13 may be configured to perform wireless communication. Thus, during maintenance and setting tasks, which include resetting tasks performed subsequent to a setting task, the settings may be checked and changed at where the head unit 13 is installed. This improves operability.

In the above embodiment, the connector 33, which is for connection of the setting terminal 90, does not have to be arranged on the front panel 11b of the case 11a of the controller unit 11. For example, the connector 33 may be arranged on a back panel or side panel of the case 11a. Alternatively, the connector 33 may be omitted, and, for example, the functionality of the setting terminal 90 may be incorporated in the controller unit 11.

In the above embodiment, the signal cable SL1, the power cable SP1, and the optical fiber cable FL have the same length. Instead, all or some of the cables SL1, SP1, and FL may have different lengths.

In the above embodiment, the signal cable SL2 and the power cable SP2 have the same length, however they do not need to have the same length. The cables SL2 and SP2 may have different lengths.

In the above embodiment, the fan 28 cools the power supply 23, and the fan 45 cools the laser light source 44. Instead, a cooling means other than a fan may be used for cooling. Alternatively, the cooling means including the fans 28 and 45 may be omitted.

In the above embodiment, for example, when the drive voltage information of the light source drive circuit 43 does not match the drive voltage information of the light source power circuit 25, the determination of whether the light source unit 12 is drivable is performed. Instead, for example, a drivable determination may be given only when the drive voltage information of the light source drive circuit 43 matches the drive voltage information of the light source power circuit 25, and a non-drivable determination may be given when the information does not match. When determined to be non-drivable, if the light source drive voltage PL output from the light source power circuit 25 is less than or equal to the drive voltage of the light source drive circuit 43 and within the operable voltage range of the light source drive circuit 43, the use of the light source unit 12 may be permitted, that is, the light source drive voltage PL may be supplied. Such determination and process may be performed in the same manner on the head unit 13.

In the above embodiment, the light source drive voltage PL is supplied and stopped by a response signal from the light source unit 12, and the head drive voltage PH is supplied and stopped by a response signal from the head unit 13. Instead, the light source drive voltage PL and the head drive voltage PH may be supplied and stopped by a response signal from the light source unit 12. Alternatively, the light source drive voltage PL and the head drive voltage PH may be supplied and stopped by a response signal from the head unit 13.

### Clauses

Technical concepts that can be understood from the above embodiment and the modified examples will now be described. Reference characters shown in parenthesis in the clauses described below denote corresponding elements of the embodiments described above. The reference characters are given as examples to aid understanding and not intended to limit elements to the elements denoted by the reference characters.

### [Clause 1]

A laser processing device, including:
a light source unit (12) including a laser light source (44) that emits a laser beam, and a light source drive circuit (43) that drives the laser light source (44);
a first electrical cable (81) connected to the light source unit (12);
an optical fiber cable (FL) connected to the light source unit (12);
a head unit (13) connected by the first electrical cable (81) and the optical fiber cable (FL) to the light source unit (12), and including a head mechanism (64) that includes a scanner for scanning the laser beam transmitted by the optical fiber cable (FL), and a head drive circuit (63) that drives the head mechanism (64);
a second electrical cable (82) connected to the light source unit (12); and
a controller unit (11) connected to the light source unit (12) by the second electrical cable (82), and including a head power circuit (26) that supplies power to the head drive circuit (63) of the head unit (13) with the first electrical cable (81) and the second electrical cable (82), a light source power circuit (25) that supplies power to the light source drive circuit (43) of the light source unit (12) with the first electrical cable (81), and a main controller (21) that controls the head power circuit (26) and the light source power circuit (25), where
the first electrical cable (81) and the second electrical cable (82) are constructed identically,
the light source unit (12) is selected from among multiple types of units having different drive voltages for the light source drive circuit (43),
the light source unit (12) is configured to receive a request signal from the controller unit (11) and transmit a response signal to the controller unit (11), and
the main controller (21) outputs the request signal, determines whether the light source unit (12) is drivable based on the response signal, supplies power from the light source power circuit (25) to the light source drive circuit (43) when determining that the light source unit (12) is drivable, and does not supply power from the light source power circuit (25) to the light source drive circuit (43) when determining that the light source unit (12) is not drivable.

### [Clause 2]

The laser processing device according to clause 1, where the main controller (21) sets a processing prohibition state when determining that the light source unit (12) is not drivable.

### [Clause 3]

The laser processing device according to clause 1 or 2, where the main controller (21) transmits control data to the light source unit (12) and the head unit (13) in response to a processing initiation operation when determining that the light source unit (12) is drivable, and invalidates the processing initiation operation when determining that the light source unit (12) is not drivable.

### [Clause 4]

The laser processing device according to any one of clauses 1 to 3, where
the light source unit (12) includes a light source controller (41) that controls the laser light source (44), and storage (42) that stores identification information of the light source unit (12),
the identification information of the light source unit (12) includes model information and unique information of the light source unit (12), and
the light source controller (41) transmits the response signal including the identification information.

### [Clause 5]

The laser processing device according to clause 4, where
the controller unit (11) includes storage (22) that stores drive voltage information of the light source power circuit (25), the identification information of each of the multiple types of the light source unit (12), and drive voltage information associated with the identification information, and
the main controller (21) determines whether the light source unit (12) is drivable based on a result of a comparison of the drive voltage information associated with identification information of the light source unit (12) that matches the identification information included in the response signal with the drive voltage information of the light source power circuit (25).

### [Clause 6]

The laser processing device according to any one of clauses 1 to 5, where the main controller (21) does not supply power from the head drive circuit (26) to the head drive circuit (43) when determining that the light source unit (12) is not drivable.

### [Clause 7]

The laser processing device according to any one of clauses 1 to 5, where
the head unit (13) is selected from among multiple types of units having different drive voltages for the head drive circuit (63),
the head unit (13) is configured to receive a request signal from the controller unit (11) and transmit a response signal to the controller unit (11), and
the main controller (21) outputs the request signal and determines whether the head unit (13) is drivable based on the response signal from the head unit (13), supplies power from the head power circuit (26) to the head drive circuit (63) when determining that the head unit (13) is drivable, and does not supply power from the head power circuit (26) to the head drive circuit (63) when determining that the head unit (13) is not drivable.

### [Clause 8]

The laser processing device according to clause 7, where
the head unit (13) includes a head controller (61) that controls the head mechanism (64), and storage (62) that stores identification information of the head unit (13),
the identification information of the head unit (13) includes model information and unique information of the head unit (13), and
the head controller (61) transmits the response signal including the model information of the head unit (13).

### [Clause 9]

The laser processing device according to clause 8, where
the controller unit (11) includes storage (22) that stores drive voltage information of the head power circuit (26), the identification information of each of the multiple types of the head unit (13), and drive voltage information associated with each of the identification information, and
the main controller (21) determines whether the head unit (13) is drivable based on a result of a comparison of the drive voltage information associated with the identification information that matches the identification information included in the response signal with the drive voltage information of the head power circuit (26).

### [Clause 10]

The laser processing device according to any one of clauses 1 to 9, where
the controller unit (11) includes a system power circuit (24) that supplies system driving voltage to the main controller (21), and
the main controller (21) transmits the request signal when activated by the system driving voltage (PS) from the system power circuit (24).

### [Clause 11]

A laser processing device, including:
a light source unit (12) including a laser light source (44) that emits a laser beam, and a light source drive circuit (43) that drives the laser light source (44);
a first electrical cable (81) connected to the light source unit (12);
an optical fiber cable (FL) connected to the light source unit (12);
a head unit (13) connected by the first electrical cable (81) and the optical fiber cable (FL) to the light source unit (12), and including a head mechanism (64) that includes a scanner for scanning the laser beam transmitted by the optical fiber cable (FL), and a head drive circuit (63) that drives the head mechanism (64);
a second electrical cable (82) connected to the light source unit (12); and
a controller unit (11) connected to the light source unit (12) by the second electrical cable (82), and including a head power circuit (26) that supplies power to the head drive circuit (63) of the head unit (13) with the first electrical cable (81) and the second electrical cable (82), a light source power circuit (25) that supplies power to the light source drive circuit (43) of the light source unit (12) with the first electrical cable (81), and a main controller (21) that controls the head power circuit (26) and the light source power circuit (25), where
the first electrical cable (81) and the second electrical cable (82) are constructed identically,
the head unit (13) is selected from among multiple types of units having different drive voltages for the head drive circuit (63),
the head unit (13) is configured to receive a request signal from the controller unit (11) and transmit a response signal to the controller unit (11), and
the main controller (21) outputs the request signal, determines whether the head unit (13) is drivable based on the response signal, supplies power from the head power circuit (26) to the head drive circuit (63) when determining that the head unit (13) is drivable, and does not supply power from the head power circuit (26) to the head drive circuit (63) when determining that the head unit (13) is not drivable.

### [Clause 12]

The laser processing device according to clause 11, the main controller (21) sets a processing prohibition state when determining that the head unit (13) is not drivable.

### [Clause 13]

The laser processing device according to clause 11 or 12, where the main controller (21) transmits control data to the light source unit (12) and the head unit (13) in response to a processing initiation operation when determining that the head unit (13) is drivable, and invalidates the processing initiation operation when determining that the head unit (13) is not drivable.

### [Clause 14]

The laser processing device according to any one of clauses 11 to 13, where
the head unit (13) includes a head controller (61) that controls the head mechanism (64), and storage (62) that stores identification information of the head unit (13),
the identification information of the head unit (13) includes model information and unique information of the head unit (13), and
the head controller (61) transmits the response signal including the identification information.

### [Clause 15]

The laser processing device according to clause 14, where
the controller unit (11) includes storage (22) that stores drive voltage information of the head power circuit (26), the identification information of each of the multiple types of the head unit (13), and drive voltage information associated with the identification information, and
the main controller (21) determines whether the head unit (13) is drivable based on a result of a comparison of the drive voltage information associated with the identification information of the head unit (13) that matches the identification information included in the response signal with the drive voltage information of the head power circuit (26).

### [Clause 16]

The laser processing device according to any one of clauses 11 to 15, where the main controller (21) does not supply power from the light source drive circuit (25) to the light source drive circuit (43) when determining that the head unit (13) is not drivable.

### [Clause 17]

A laser processing device, including:
a first light source unit (12) including a first laser light source (44) and a first light source drive circuit (43) that drives the first laser light source (44);
a first head unit (13) connected by a first electrical cable (81) and the optical fiber cable (FL) to the first light source unit (12), and including a first head mechanism (64) that irradiates a processing subject with a laser beam transmitted by the optical fiber cable, and a first head drive circuit (63) that drives the head mechanism (64);
a first controller unit (11) connected to the first light source unit (12) by a second electrical cable (82), and including a first light source power circuit (25) that supplies drive voltage to the first light source drive circuit (43), a first head power circuit (26) that supplies drive voltage to the first head drive circuit (63), and a first main controller (21) that controls the first light source power circuit (25) and the first head power circuit (26);
a second head unit (212) including a second laser light source (44), a second light source drive circuit (43) that drives the second laser light source (44), a second head mechanism (64) that irradiates a processing subject with a laser beam emitted from the second laser light source (44), and a second head drive circuit (63) that drives the second head mechanism (64); and
a second controller unit (211) connected to the second head unit (212) by a third electrical cable (83), and including a second light source power circuit (25) that supplies drive voltage to the second light source drive circuit (43), a second head power circuit (26) that supplies drive voltage to the second head drive circuit (63), and a second main controller (21) that controls the second light source power circuit (25) and the second head power circuit (26), where
a case of the first controller unit (11) and a case of the second controller unit (211) are constructed identically,
the first electrical cable (81), the second electrical cable (82), and the third electrical cable (83) are constructed identically,
the first light source unit (12) is selected from among multiple types of units having different drive voltages for the first light source drive circuit (43),
the first light source unit (12) is configured to receive a request signal from the first controller unit (11) and transmit a response signal to the first controller unit (11), and
the first main controller (21) outputs the request signal, determines whether the first light source unit (12) is drivable based on the response signal, supplies power from the first light source power circuit (25) to the first light source drive circuit (43) when determining that the first light source unit (12) is drivable, and does not supply power from the first light source power circuit (25) to the first light source drive circuit (43) when determining that the first light source unit (12) is not drivable.

Exemplary descriptions are given above. One skilled in the art may recognize further potential combinations and replacements of the elements and methods (manufacturing processes) in addition to those illustrated to describe the techniques of the present disclosure. The present disclosure is intended to include any substitutions, modifications, and changes included in the scope of the disclosure including the claims.

## Claims

1. A laser processing device, comprising:
a light source unit including a laser light source that emits a laser beam, and a light source drive circuit that drives the laser light source;
a first electrical cable connected to the light source unit;
an optical fiber cable connected to the light source unit,
a head unit connected by the first electrical cable and the optical fiber cable to the light source unit, and including a head mechanism that includes a scanner for scanning the laser beam transmitted by the optical fiber cable, and a head drive circuit that drives the head mechanism;
a second electrical cable connected to the light source unit; and
a controller unit connected to the light source unit by the second electrical cable, and including a head power circuit that supplies power to the head drive circuit of the head unit with the first electrical cable and the second electrical cable, a light source power circuit that supplies power to the light source drive circuit of the light source unit with the first electrical cable, and a main controller that controls the head power circuit and the light source power circuit, wherein
the first electrical cable and the second electrical cable are constructed identically,
the light source unit is selected from among multiple types of units having different drive voltages for the light source drive circuit,
the light source unit is configured to receive a request signal from the controller unit and transmit a response signal to the controller unit, and
the main controller outputs the request signal, determines whether the light source unit is drivable based on the response signal, supplies power from the light source power circuit to the light source drive circuit when determining that the light source unit is drivable, and does not supply power from the light source power circuit to the light source drive circuit when determining that the light source unit is not drivable.

2. The laser processing device according to claim 1, wherein the main controller sets a processing prohibition state when determining that the light source unit is not drivable.

3. The laser processing device according to claim 1 or 2, wherein the main controller transmits control data to the light source unit and the head unit in response to a processing initiation operation when determining that the light source unit is drivable, and invalidates the processing initiation operation when determining that the light source unit is not drivable.

4. The laser processing device according to any one of claims 1 to 3, wherein
the light source unit includes a light source controller that controls the laser light source, and storage that stores identification information of the light source unit,
the identification information of the light source unit includes model information and unique information of the light source unit, and
the light source controller transmits the response signal including the identification information.

5. The laser processing device according to claim 4, wherein
the controller unit includes storage that stores drive voltage information of the light source power circuit, the identification information of each of the multiple types of the light source unit, and drive voltage information associated with the identification information, and
the main controller determines whether the light source unit is drivable based on a result of a comparison of the drive voltage information associated with identification information of the light source unit that matches the identification information included in the response signal with the drive voltage information of the light source power circuit.

6. The laser processing device according to any one of claims 1 to 5, wherein the main controller does not supply power from the head drive circuit to the head drive circuit when determining that the light source unit is not drivable.

7. The laser processing device according to any one of claims 1 to 5, wherein
the head unit is selected from among multiple types of units having different drive voltages for the head drive circuit,
the head unit is configured to receive a request signal from the controller unit and transmit a response signal to the controller unit, and
the main controller outputs the request signal and determines whether the head unit is drivable based on the response signal from the head unit, supplies power from the head power circuit to the head drive circuit when determining that the head unit is drivable, and does not supply power from the head power circuit to the head drive circuit when determining that the head unit is not drivable.

8. The laser processing device according to claim 7, wherein
the head unit includes a head controller that controls the head mechanism, and storage that stores identification information of the head unit,
the identification information of the head unit includes model information and unique information of the head unit, and
the head controller transmits the response signal including the model information of the head unit.

9. The laser processing device according to claim 8, wherein
the controller unit includes storage that stores drive voltage information of the head power circuit, the identification information of each of the multiple types of the head unit, and drive voltage information associated with each of the identification information, and
the main controller determines whether the head unit is drivable based on a result of a comparison of the drive voltage information associated with the identification information that matches the identification information included in the response signal with the drive voltage information of the head power circuit.

10. The laser processing device according to any one of claims 1 to 9, wherein
the controller unit includes a system power circuit that supplies system driving voltage to the main controller, and
the main controller transmits the request signal when activated by the system driving voltage from the system power circuit.

11. A laser processing device, comprising:
a light source unit including a laser light source that emits a laser beam, and a light source drive circuit that drives the laser light source;
a first electrical cable connected to the light source unit;
an optical fiber cable connected to the light source unit;
a head unit connected by the first electrical cable and the optical fiber cable to the light source unit, and including a head mechanism that includes a scanner for scanning the laser beam transmitted by the optical fiber cable, and a head drive circuit that drives the head mechanism;
a second electrical cable connected to the light source unit; and
a controller unit connected to the light source unit by the second electrical cable, and including a head power circuit that supplies power to the head drive circuit of the head unit with the first electrical cable and the second electrical cable, a light source power circuit that supplies power to the light source drive circuit of the light source unit with the first electrical cable, and a main controller that controls the head power circuit and the light source power circuit, wherein
the first electrical cable and the second electrical cable are constructed identically,
the head unit is selected from among multiple types of units having different drive voltages for the head drive circuit,
the head unit is configured to receive a request signal from the controller unit and transmit a response signal to the controller unit, and
the main controller outputs the request signal, determines whether the head unit is drivable based on the response signal, supplies power from the head power circuit to the head drive circuit when determining that the head unit is drivable, and does not supply power from the head power circuit to the head drive circuit when determining that the head unit is not drivable.

12. A laser processing device, comprising:
a first light source unit including a first laser light source and a first light source drive circuit that drives the first laser light source;
a first head unit connected by a first electrical cable and the optical fiber cable to the first light source unit, and including a first head mechanism that irradiates a processing subject with a laser beam transmitted by the optical fiber cable, and a first head drive circuit that drives the head mechanism;
a first controller unit connected to the first light source unit by a second electrical cable, and including a first light source power circuit that supplies drive voltage to the first light source drive circuit, a first head power circuit that supplies drive voltage to the first head drive circuit, and a first main controller that controls the first light source power circuit and the first head power circuit;
a second head unit including a second laser light source, a second light source drive circuit that drives the second laser light source, a second head mechanism that irradiates a processing subject with a laser beam emitted from the second laser light source, and a second head drive circuit that drives the second head mechanism; and
a second controller unit connected to the second head unit by a third electrical cable, and including a second light source power circuit that supplies drive voltage to the second light source drive circuit, a second head power circuit that supplies drive voltage to the second head drive circuit, and a second main controller that controls the second light source power circuit and the second head power circuit, wherein
a case of the first controller unit and a case of the second controller unit are constructed identically,
the first electrical cable, the second electrical cable, and the third electrical cable are constructed identically,
the first light source unit is selected from among multiple types of units having different drive voltages for the first light source drive circuit,
the first light source unit is configured to receive a request signal from the first controller unit and transmit a response signal to the first controller unit, and
the first main controller outputs the request signal, determines whether the first light source unit is drivable based on the response signal, supplies power from the first light source power circuit to the first light source drive circuit when determining that the first light source unit is drivable, and does not supply power from the first light source power circuit to the first light source drive circuit when determining that the first light source unit is not drivable.
